# EUROPÄISCHE PATENTSCHRIFT

(11) **EP 2 430 334 B1**
(45) Veröffentlichungstag und Bekanntmachung des Hinweises auf die Patenterteilung: **21.08.2013**
(21) Anmeldenummer: 10702085.1
(22) Anmeldetag: 26.01.2010
(51) Int. Cl.: F16J 15/08

(54) **FLACHDICHTUNG MIT DICHTSICKE UND EINPRÄGUNG SOWIE HERSTELLUNGSVERFAHREN DAVON**
FLAT SEAL COMPRISING SEALING BEAD AND EMBOSSING, AND METHOD FOR THE PRODUCTION THEREOF
JOINT PLAT À NERVURE D'ÉTANCHÉITÉ ET PARTE EN CREUX AINSI QUE SON PROCÉDÉ DE PRODUCTION

(30) Priorität: 15.05.2009 DE 102009021503
(43) Veröffentlichungstag der Anmeldung: 21.03.2012
(73) Patentinhaber: Federal -Mogul Sealing Systems GmbH, 57562 Herdorf (DE)
(72) Erfinder: SCHMITT, Klaus, 57520 Grünebach (DE)
(74) Vertreter: Becker Kurig Straus
(86) Internationale Anmeldenummer: PCT/EP2010/050824
(87) Internationale Veröffentlichungsnummer: WO 2010/130469

(56) Entgegenhaltungen:
- DE-A1- 10 143 431
- DE-A1-102004 056 638
- DE-A1-102007 000 376
- US-A1- 2004 183 259

## Beschreibung

Die vorliegende Erfindung betrifft eine metallische Flachdichtung, insbesondere Zylinderkopfdichtung, mit einer Dichtsicke und einer geprägten Rutschsicherung und/oder geprägten Zusatzabdichtung.

Die Abdichtfunktion von metallischen Flachdichtungen wird unter anderem durch die Ausbildung von Dichtsicken erzeugt, die lokale Pressungserhöhungen bewirken, und abzudichtende Durchgänge wie Zylinderöffnungen, Wasser- und Öldurchtritte geschlossen umgeben. An der Dichtsicke werden ein oder mehrere linienförmige Abdichtzonen erzeugt. Dichtsicken können als Halb- oder Vollsicke ausgebildet werden.

Dichtsicken arbeiten allerdings nur in einem begrenzten Bereich der Verformung optimal. Einerseits muss eine Mindestpressung gewährleistet sein, um durch eine geringfügige und elastische Verformung der Dichtsicke eine Abdichtung zu bilden. Andererseits darf die Dichtsicke nicht gänzlich plattgedrückt werden, insbesondere nicht plastisch verformt werden, sondern muss elastisch bleiben, da ansonsten die Dichtwirkung verloren geht. Im Motorbetrieb muss also sichergestellt werden, dass die Dichtsicke innerhalb eines Bereichs elastischer Verformung arbeiten kann.

Um ein vollständiges Plattdrücken zu verhindern, werden so genannte Verpressungsbegrenzer bzw. Stopper eingesetzt. Dabei handelt es sich um lokale Erhöhungen der Dicke neben einer Dichtsicke. Die Dicke des Verpressungsbegrenzers wird dabei maximal so gewählt, dass eine Mindestverformung möglich ist, und gleichzeitig minimal so, dass die maximal mögliche Verformung unter Druck nicht so groß werden kann, dass die Dichtsicke plastisch verformt wird.

Verpressungsbegrenzer können beispielsweise in brillenartiger Form (d.h. in Form von verbundenen Ringen) bei Zylinderkopfdichtungen für Motoren mit mehr als einem Zylinder ausgeführt werden. Ein Umbördeln von Lagen zur Bildung eines Stoppers ist möglich, was allerdings weniger flexibel einzusetzen ist, und auch lediglich am Rande von Lagen der Dichtung. Bekannt sind Dichtungen mit Verpressungsbegrenzer und darunterliegender Lage, wobei zwischen Verpressungsbegrenzer und dieser Lage Beschichtungsmaterial vorgesehen ist. Für die Befestigung von zusätzlichen Stopperlagen ist die Befestigung der Verpressungsbegrenzer mittels Laserschweißen oder mechanischer Fügetechnik auf Funktionslagen, Distanzlagen oder auch Schutzlagen bekannt.

Bei diesen Arten der Befestigung von Stoppern als zusätzlicher Lage besteht jedoch die Gefahr, dass sich der Verpressungsbegrenzer bzw. die Stopperbrille während des Betriebs des Motors verschiebt. Auch können Schleichgase zwischen der Stopperlage und der daran angrenzenden Lage - oder allgemein zwischen Lagen - aus- bzw. eintreten. Dies wird im Stand der Technik durch Beschichtungen verhindert, die auf einer der betreffenden Lagen aufgebracht sind.

Aus der Druckschrift US 2004/183259 A1 ist eine Zylinderkopfdichtung bekannt, bei der ein Auflageblech mit einer Kontur versehen ist, die um eine Öffnung in der Dichtung herum verläuft. In der Kontur ist ein Stopper aus Elastomer angeordnet.

Aus der Druckschrift DE 10-1 43 431 A1 ist eine Zylinderkopfdichtung bekannt, bei der eine Abkröpfung im Trägerblech vorgesehen ist. Ein Verformungsbegrenzer ist in der Abkröpfung angeordnet, und ein Abstützelement in Form einer Halb- oder Vollsicke ist im Bereich des Verformungsbegrenzers in dem Trägerblech vorgesehen.

Es ist daher die Aufgabe der vorliegenden Erfindung, eine gattungsgemäße Flachdichtung mit einer verbesserten Rutschsicherung und/oder verbesserten Abdichtung zwischen Lagen bereitzustellen.

Gemäß einem ersten Aspekt der Erfindung wird eine metallische Flachdichtung, insbesondere Zylinderkopfdichtung, gemäß den unabhängigen Ansprüchen 1 und 2 bereitgestellt.

Eine Einprägung bildet erfindungsgemäß die Fixierhilfe, wodurch ein Verrutschen wirkungsvoll verhindert wird. Ein Verrutschen der Bleche wird durch die zusätzliche Auflage verhindert, die von der Fixierhilfe gebildet wird.

Gemäß Anspruch 1
- liegen die Distanzlage und die Stopperlage aneinander an;
- ist die eingeprägte Kontur eine formschlüssige gemeinsame Kontur in der Distanzlage und der Stopperlage; und
- weist die eingeprägte Kontur in Richtung der Funktionslage.

Durch das Ausbilden einer gemeinsamen, formschlüssigen Prägung in sowohl Distanz- als auch Stopperlage wird die Rutschsicherung weiter verbessert. Ferner wird durch die formschlüssige Prägung eine zusätzliche Mikroabdichtung zwischen Distanz- und Stopperlage erzeugt, die einen Austritt von Schleichgasen zwischen den Lagen verhindert. Eine zusätzliche Beschichtung, um dies zu verhindern, ist daher nicht mehr erforderlich. Distanz- und Stoppcrlagc können beispielsweise mittels Durchsetzfügen verbunden sein, wobei zusätzlich dazu die Prägung vorgesehen ist.

Gemäß Anspruch 2
- liegen die Funktionslage und die Stopperlage aneinander an;
- ist die eingeprägte Kontur eine formschlüssige gemeinsame Kontur in der Funktionslage und der Stopperlage; und
- weist die eingeprägte Kontur in Richtung der Distanzlage.

Durch das Ausbilden einer gemeinsamen, formschlüssigen Prägung in sowohl Funktions- als auch Stopperlage wird die Rutschsicherung weiter verbessert. Ferner wird durch die formschlüssige Prägung eine zusätzliche Mikroabdichtung zwischen Funktions- und Stopperlage erzeugt, die einen Austritt von Schleichgasen zwischen den Lagen verhindert. Eine zusätzliche Beschichtung, um dies zu verhindern, ist daher nicht mehr erforderlich. Funktions- und Stopperlage können beispielsweise mittels Durchsetzfügen verbunden sein, wobei zusätzlich dazu die Prägung vorgesehen ist.

Gemäß einer Ausführungsform ist die eingeprägte Kontur in radialer Richtung von einer jeweiligen Durchgangsöffnung aus vor und/oder hinter der entsprechenden Dichtsicke angeordnet und bevorzugt ist die Dichtsicke in Richtung der Stopperlage ausgerichtet.

Radial von der Durchgangsöffnung aus gesehen kann die Prägung vor oder hinter der jeweiligen Dichtsicke vorgesehen werden, oder die Prägung ist eine Doppelkontur, die sowohl vor als auch hinter der jeweiligen Dichtsicke vorgesehen ist. Die Höhe bzw. Tiefe der Prägung kann in Ausführungsformen der Erfindung im Bereich von 1/200 bis 1/400 mm liegen, und 0,1 mm breit sein.

In Ausführungsformen der Erfindung kann die Prägung zusätzlich auch eine Funktion als Verpressungsbegrenzer für die Dichtsicke wahrnehmen.

Gemäß einer Ausführungsform umfasst die Flachdichtung weiter
- eine zweite Funktionslage auf der der Stopperlage abgewandten Seite der Distanzlage; und
- jeweils eine geschlossene Dichtsicke in der zweiten Funktionslage um jede Durchgangsöffnung herum, wobei die Dichtsicke in Richtung der Distanzlage weist.

Gemäß einer Ausführungsform
- überlagern sich die Dichtsicke(n) in der Funktionslage und/oder der zweiten Funktionslage und die Stopperlage.

Dabei handelt es sich um die so genannte "Sicke auf Stopper"-Auslegung.

Gemäß einem zweiten Aspekt der Erfindung wird ein Verfahren zur Herstellung einer metallischen Flachdichtung, insbesondere Zylinderkopfdichtung, gemäß den unabhängigen Ansprüchen 6 und 7 bereitgestellt.

Gemäß Anspruch 6 umfasst das Verfahren
- Verbinden der Distanzlage und der Stopperlage, so dass Distanzlage und Stopperlage aneinander anliegen;
wobei die Kontur formschlüssig gemeinsam in die Distanzlage und die Stopperlage eingeprägt wird, wobei die eingeprägte Kontur in Richtung der Funktionslage weist.

Gemäß Anspruch 7 umfasst das Verfahren
- Verbinden der Funktionslage und der Stopperlage, so dass Funktionslage und Stopperlage aneinander anliegen;
wobei die Kontur formschlüssig gemeinsam in die Funktionslage und die Stopperlage eingeprägt wird, wobei die eingeprägte Kontur in Richtung der Distanzlage weist.

Ein Verbinden von Lagen kann mittels Clinchen erfolgen.

Gemäß einer Ausführungsform werden die Funktionslage und die Stopperlage gemeinsam umgeformt, um die Dichtsicke zu bilden.

Gemäß einer Ausführungsform wird die Kontur in radialer Richtung von einer jeweiligen Durchgangsöffnung aus vor und/oder hinter der entsprechenden Dichtsicke eingeprägt, wobei die Dichtsicke in Richtung der Stopperlage weist;.

Gemäß einer Ausführungsform umfasst das Verfahren weiter
- Bereitstellen einer zweiten Funktionslage auf der der Stopperlage abgewandten Seite der Distanzlage ; und
- Bereitstellen jeweils einer geschlossenen Dichtsicke in der zweiten Funktionslage um jede Durchgangsöffnung herum, wobei die Dichtsicke in Richtung der Distanzlage weist.

Gemäß einer Ausführungsform überlagern sich die Dichtsicke(n) in der Funktionslage und/oder der zweiten Funktionslage und die Stopperlage.

Das Einprägen kann gleichzeitig mit einem Verbinden von Lagen, beispielsweise durch Clinchen erfolgen, so dass kein zusätzlicher Arbeitsgang nötig ist.

### Kurze Beschreibung der Zeichnung

Im Folgenden wird die Erfindung weiter erläutert unter Bezugnahme auf die Zeichnung, in der
- Fig. 1: eine erste Ausführungsform einer Flachdichtung gemäß der Erfindung im Querschnitt zeigt;
- Fig. 2: eine zweite Ausführungsform einer Flachdichtung gemäß der Erfindung im Querschnitt zeigt;
- Fig. 3: eine Flachdichtung (nicht Teil der Erfindung) im Querschnitt zeigt; und
- Fig. 4: eine alternative Ausführungsform einer Flachdichtung von Fig. 1 zeigt.

### Detaillierte Beschreibung der Erfindung

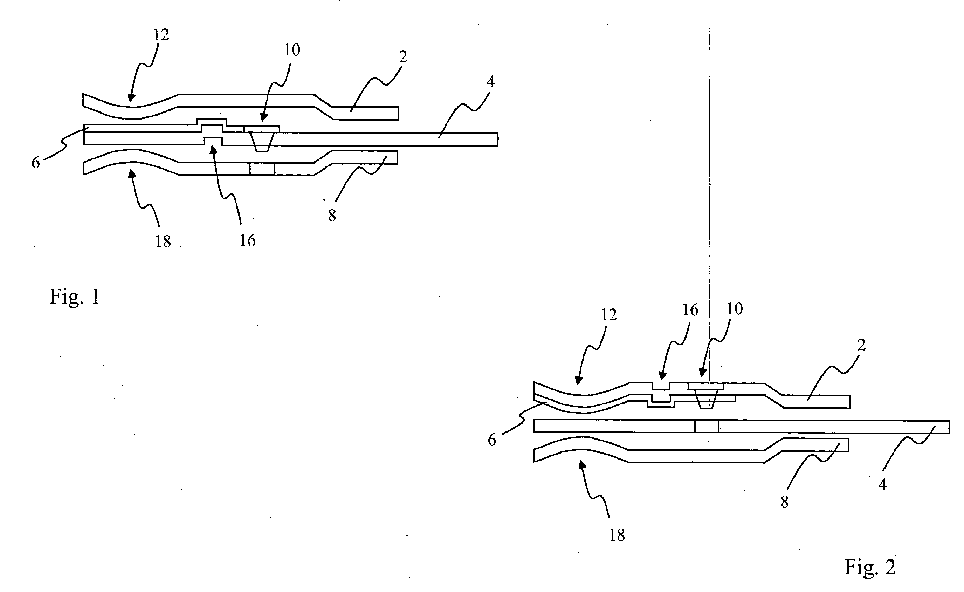

In Fig. 1 ist eine erste Ausführungsform der erfindungsgemäßen Flachdichtung gezeigt. Sie umfasst eine Funktionslage 2, eine Distanzlage 4, eine Stopperlage 6 und eine zweite Funktionslage 8. In den Funktionslagen 2 und 8 sind Dichtsicken 12 bzw. 18 vorgesehen, die jeweils in Richtung der Distanz- bzw. Stopperlage weisen. Im hier gezeigten Beispiel sind die Sicken Vollsicken. In alternativen Ausführungsformen sind auch Halbsicken oder eine Kombination von Halb- und Vollsicken-möglich.

Die Stopperlage 6 ist mittels Durchsetzfügen an Clinchpunkten 10 (nur einer ist hier gezeigt) mit der Distanzlage 4 verbunden. Die Distanzlage 4 kann eine Kohlenstoffstahl-Lage sein. In der hier gezeigten Ausführungsform ist eine gemeinsame Prägung 16 in Distanzlage 4 und Stopperlage 6 vorgesehen. Die Einprägung 16 ist formschlüssig, d.h. zumindest an der Prägung sind Distanzlage 4 und Stopperlage 6 formschlüssig und somit Fluid-dicht verbunden.

Die Einprägung 16 bildet eine Fixierhilfe bzw. Rutschsicherung, die ein Verrutschen der Funktionslage 2 bzw. der miteinander verbundenen Stopperlage 6 und der Distanzlage 4 verhindert, durch Ausbildung einer zusätzlichen Auflage für Funktionslage 2/Stopperlage 6 auf der Distanzlage 4. Die Einprägung 16 weist in Richtung der Funktionslage 2. In dem gezeigten Beispiel ist die Einprägung 16 in radialer Richtung von der Brennraumöffnung aus hinter der Sicke 12 angeordnet. Eine Anordnung vor der Sicke ist ebenfalls möglich, oder eine Anordnung sowohl vor als auch hinter der Sicke (d.h. als eine Doppelkontur). In einer beispielhaften Ausführungsform beträgt die Breite der Prägung 0,1 mm, und die Höhe 0,02 bis 0,04 mm.

Eine weitere Funktion der Einprägung 16 kann in einer zusätzlichen Abdichtung bestehen. Wenn die Stopperlage 6 ohne eine Beschichtung auf der Distanzlage 4 aufliegt, können Schleichgase zwischen den Schichten ein- bzw. austreten. Durch die Ausbildung der Einprägung 16 wird eine zusätzliche Abdichtung erzeugt, die dies verhindert. Eine Beschichtung ist dafür nicht erforderlich.

Fig. 2 zeigt eine zweite Ausführungsform der Erfindung. Diese Alternative der Flachdichtung umfasst ebenfalls eine Funktionslage 2, eine Distanzlage 4, eine Stopperlage 6 und eine (aber optionale) zweite Funktionslage 8.

In den Funktionslagen 2 und 8 sind Dichtsicken 12 bzw. 18 vorgesehen, die jeweils in Richtung der Distanz- bzw. Stopperlage weisen. Im hier gezeigten Beispiel sind die Sicken Vollsicken. In alternativen Ausführungsformen sind auch Halbsicken oder eine Kombination von Halb- und Vollsicken möglich. Die Funktionslage 2 ist mittels Durchsetzfügen an Clinchpunkten 10 (nur einer ist hier gezeigt) mit der Stopperlage 6 verbunden. Die Stopperlage 6 liegt an der Funktionslage 2 an und folgt somit auch der Form der Sicke 12.

Diese Geometrie kann beispielsweise dadurch erreicht werden, dass die Stopperlage 6 mit der Funktionslage 2 etwa durch Durchsetzfügen verbunden wird, und gemeinsam mit der Funktionslage 2 umgeformt wird, um die Dichtsicke 12 zu bilden. Gleichzeitig damit kann die Prägung 16 gemeinsam in die Funktionslage 2 und die Stopperlage 8 cingebracht werden. Im Bereich der Prägung 16 werden damit die Funktionslage 2 und die Stopperlage 8 formschlüssig und somit Fluid-dicht verbunden.

Die Einprägung 16 bildet eine Rutschsicherung für die Bleche der Funktionslage 2 und der damit verbundenen Stopperlage 6 sowie der Distanzlage 4. Die Einprägung 16 weist in dieser Ausführungsform in die gleiche Richtung wie die Sicke 12, d.h. in Richtung der Distanzlage 4. In dem gezeigten Beispiel ist die Einprägung 16 in radialer Richtung von der Brennraumöffnung aus hinter der Sicke 12 angeordnet. Eine Anordnung vor der Sicke ist ebenfalls möglich, oder eine Anordnung sowohl vor als auch hinter der Sicke (d.h. als eine Doppelkontur).

Eine zusätzliche Abdichtung zwischen der Funktionslage 2 und der Stopperlage 6 kann durch die Einprägung 16 gebildet werden. Schleichgase werden dadurch am Ein- bzw. Austreten gehindert. Eine Beschichtung ist dafür nicht erforderlich.

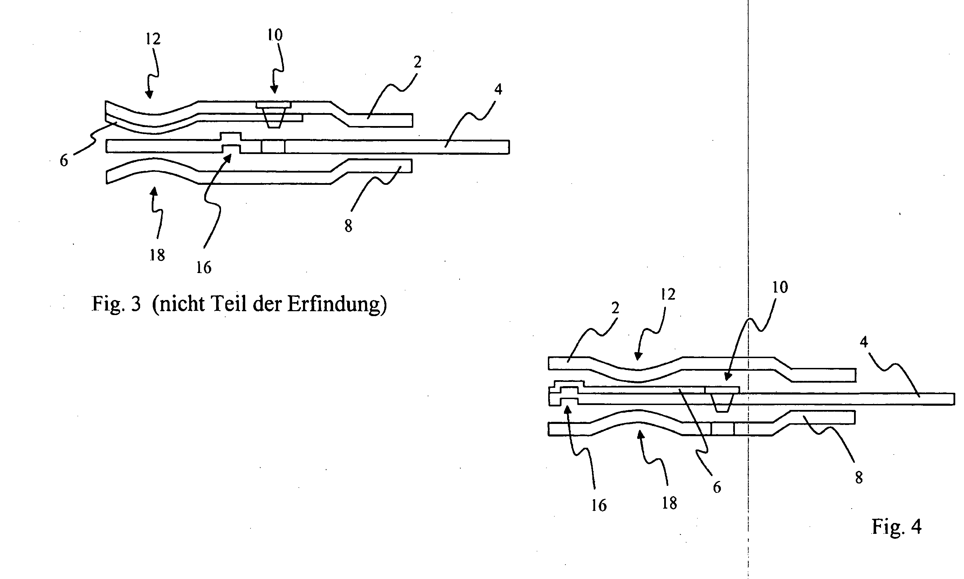

In Fig. 4 ist eine alternative Ausführungsform der Flachdichtung von Fig. 1. gezeigt, die im Wesentlichen der von Fig. 1 entspricht. Abweichend ist hier aber die Prägung 16 in radialer Richtung vor der Sicke 12 angeordnet.

Die zweite Funktionslage ist bei allen vorstehend erläuterten Ausführungsformen optional. Die Flachdichtung gemäß der Erfindung ist bevorzugt eine Zylinderkopfdichtung, wie in den Figuren beispielhaft gezeigt, kann jedoch auch eine andere metallische Flachdichtung sein.

Der Brennraum (oder allgemein die Durchgangsöffnung) ist bei den vorstehenden Figuren jeweils auf der linken Seite der Figur gelegen. Obwohl vorstehend beispielhaft nur jeweils eine Durchgangsöffnung entsprechend einem Brennraum dargestellt ist, kann die Flachdichtung auch für Mehrzylindermotoren mit mehr als einer Brennraumöffnung vorgesehen sein. Ebenfalls können zusätzliche Durchgangöffnungen in der Dichtung vorhanden sein, wie etwa für Kühl- und Schmiermitteldurchtritte oder auch Durchgänge für Befestigungsbolzen. Solche Durchgangsöffnungen können aber in entsprechender Weise mit Dichtsicken und einem erfindungsgemäßen Verpressungsbegrenzer in Form einer Einprägung abgedichtet sein.

Die Dichtsicken der Flachdichtung können sowohl Vollsicken oder Halbsicken sein. Halb-und Vollsicken können in einer Flachdichtung in beliebigen Kombinationen vorgesehen werden. Beispielsweise könnte die Dichtsicke in der ersten Funktionslage eine Vollsicke sein, und die zusätzliche Sicke in der optionalen zweiten Funktionslage eine Halbsicke, oder umgekehrt.

Die Verbindung von Lagen kann auch durch andere Verfahren als Durchsetzfügen bzw. "Clinchen" erfolgen, beispielsweise Laserschweißen.

Die Einprägung kann in radialer Richtung von der Durchgangsöffnung aus hinter (wie in Fig. 1 gezeigt) oder vor (wie in Fig. 4 gezeigt) der Dichtsicke angeordnet sein. In einer Kombination kann die Einprägung aber auch sowohl vor als auch hinter der Dichtsicke angeordnet sein, etwa in Form einer Doppelkontur.

Bei der Dichtung gemäß der Erfindung wird das Austreten von Schleichgasen zwischen den Lagen vermindert oder sogar ganz verhindert. Ein Verrutschen des Stoppers bzw. der Stopperbrille wird verhindert. Der Verpressungsbegrenzer wird durch die Einprägung in Position gehalten bzw. durch eine positionsfeste Einprägung gebildet. Die Prägung bildet eine zusätzliche Auflage, die als Rutschsicherung dient.

Eine Beschichtung zwischen den Lagen, um das Ein- bzw. Austreten von Schleichgasen zu verhindern, ist nicht erforderlich, da diese Aufgabe von der Prägung übernommen wird. Es sind außer den Verbindungsstellen etwa des Durchsetzfügens keine zusätzlichen Befestigungen erforderlich. Es ist kein zusätzlicher Arbeitsgang erforderlich, da die Prägung während des Durchsetzfügens erfolgen kann.

Die Erfindung eignet sich für alle Ausführungsarten von Dichtungen mit Lagen. Sie ermöglicht den Einsatz kostengünstiger Materialien.

## Patentansprüche

1. Metallische Flachdichtung, insbesondere Zylinderkopfdichtung, mit mindestens einer Durchgangsöffnung, umfassend
- eine Funktionslage (2);
- eine Distanzlage (4); und
- eine zwischen Funktionslage (2) und Distanzlage (4) angeordnete Stopperlage (6);
- jeweils eine geschlossene Dichtsicke (12) in der Funktionslage (2) um jede Durchgangsöffnung herum, wobei die Dichtsicke (12) in Richtung der Stopperlage (6) weist; und, wobei - die Distanzlage (4) und die Stopperlage (6) aneinander anliegen; **gekennzeichnet durch**
- jeweils eine eingeprägte geschlossene Kontur (16) in der Stopperlage (6) und der Distanzlage (4) um jede Durchgangsöffnung herum, wobei die Kontur (16) eine Fixierhilfe bildet; wobei
- die eingeprägte Kontur (16) eine formschlüssige gemeinsame Kontur in der Distanzlage (4) und der Stopperlage (6) ist; und
- die eingeprägte Kontur (16) in Richtung der Funktionslage (2) weist.

2. Metallische Flachdichtung, insbesondere Zylinderkopfdichtung, mit mindestens einer Durchgangsöffnung, umfassend
- eine Funktionslage (2);
- eine Distanzlage (4); und
- eine zwischen Funktionslage (2) und Distanzlage (4) angeordnete Stopperlage (6);
- jeweils eine geschlossene Dichtsicke (12) in der Funktionslage (2) um jede Durchgangsöffnung herum, wobei die Dichtsicke (12) in Richtung der Stopperlage (6) weist; **gekennzeichnet durch**
- jeweils eine eingeprägte geschlossene Kontur (16) in der Stopperlage (6) und der Funktionslage (2) um jede Durchgangsöffnung herum, wobei die Kontur (16) eine Fixierhilfe bildet; und
wobei
- die Funktionslage (2) und die Stopperlage (6) aneinander anliegen;
- die eingeprägte Kontur (16) eine formschlüssige gemeinsame Kontur in der Funktionslage (2) und der Stopperlage (6) ist; und
- die eingeprägte Kontur (16) in Richtung der Distanzlage (4) weist.

3. Metallische Flachdichtung nach einem der Ansprüche 1 bis 2, wobei die eingeprägte Kontur (16) in radialer Richtung von einer jeweiligen Durchgangsöffnung aus vor und/oder hinter der entsprechenden Dichtsicke (12) angeordnet ist.

4. Metallische Flachdichtung nach einem der Ansprüche 1 bis 3, weiter umfassend
- eine zweite Funktionslage (8) auf der der Stopperlage (6) abgewandten Seite der Distanzlage (4); und
- jeweils eine geschlossene Dichtsicke (18) in der zweiten Funktionslage (8) um jede Durchgangsöffnung herum, wobei die Dichtsicke (18) in Richtung der Distanzlage (4) weist.

5. Metallische Flachdichtung nach einem der Ansprüche 1 bis 4, wobei
- die Dichtsicke(n) (12, 18) in der Funktionslage (2) und/oder der zweiten Funktionslage (8) und die Stopperlage (6) sich überlagern.

6. Verfahren zur Herstellung einer metallischen Flachdichtung, insbesondere Zylinderkopfdichtung, mit mindestens einer Durchgangsöffnung, umfassend
- Bereitstellen einer Funktionslage (2);
- Bereitstellen einer Distanzlage (4); und
- Bereitstellen einer zwischen Funktionslage (2) und Distanzlage (4) angeordneten Stopperlage (6);
- Bereitstellen jeweils einer geschlossenen Dichtsicke (12) in der Funktionslage (2) um jede Durchgangsöffnung herum, wobei die Dichtsicke (12) in Richtung der Stopperlage (6) weist; und, weiter umfassend
- Verbinden der Distanzlage (4) und der Stopperlage (6), so dass Distanzlage (4) und Stopperlage (6) aneinander anliegen; **gekennzeichnet durch**
- Einprägen einer geschlossenen Kontur (16) in die Stopperlage (6) und die Distanzlage (4) um jede Durchgangsöffnung herum, wobei die Kontur (16) eine Fixierhilfe bildet;
wobei die Kontur (16) formschlüssig gemeinsam in die Distanzlage (2) und die Stopperlage (6) eingeprägt wird, wobei die eingeprägte Kontur (16) in Richtung der Funktionslage (2) weist.

7. Verfahren zur Herstellung einer metallischen Flachdichtung, insbesondere Zylinderkopfdichtung, mit mindestens einer Durchgangsöffnung, umfassend
- Bereitstellen einer Funktionslage (2);
- Bereitstellen einer Distanzlage (4); und
- Bereitstellen einer zwischen Funktionslage (2) und Distanzlage (4) angeordneten Stopperlage (6);
- Bereitstellen jeweils einer geschlossenen Dichtsicke (12) in der Funktionslage (2) um jede Durchgangsöffnung herum, wobei die Dichtsicke (12) in Richtung der Stopperlage (6) weist; **gekennzeichnet durch**
- Einprägen einer geschlossenen Kontur (16) in die Stopperlage (6) und die Funktionslage (2) um jede Durchgangsöffnung herum, wobei die Kontur (16) eine Fixierhilfe bildet;
weiter umfassend
- Verbinden der Funktionslage (2) und der Stopperlage (6), so dass Funktionslage (2) und Stopperlage (6) aneinander anliegen;
wobei die Kontur (16) formschlüssig gemeinsam in die Funktionslage (2) und die Stopperlage (6) eingeprägt wird, wobei die eingeprägte Kontur (16) in Richtung der Distanzlage (4) weist.

8. Verfahren nach einem Anspruch 7, wobei die Funktionslage (2) und die Stopperlage (6) gemeinsam umgeformt werden, um die Dichtsicke (12) zu bilden.

9. Verfahren nach einem der Ansprüche 6 bis 8, wobei die Kontur (16) in radialer Richtung von einer jeweiligen Durchgangsöffnung aus vor und/oder hinter der entsprechenden Dichtsicke (12) eingeprägt wird.

10. Verfahren nach einem der Ansprüche 6 bis 9, weiter umfassend
- Bereitstellen einer zweiten Funktionslage (8) auf der der Stopperlage (6) abgewandten Seite der Distanzlage (4); und
- Bereitstellen jeweils einer geschlossenen Dichtsicke (18) in der zweiten Funktionslage (8) um jede Durchgangsöffnung herum, wobei die Dichtsicke (18) in Richtung der Distanzlage (4) weist.

11. Verfahren nach einem der Ansprüche 6 bis 10, wobei
- die Dichtsicke(n) (12, 18) in der Funktionslage (2) und/oder der zweiten Funktionslage (8) und die Stopperlage (6) sich überlagern.

## Claims

1. Metallic flat gasket, in particular cylinder head gasket, having at least one through-hole, comprising
- a functional layer (2);
- a spacer layer (4); and
- a stopper layer (6) arranged between the functional layer (2) and the spacer layer (4);
- a respective closed sealing bead (12) in the functional layer (2) extending around each through-hole, wherein the sealing bead (12) points in the direction of the stopper layer (6); and
- wherein the spacer layer (4) and the stopper layer (6) rest against each other; **characterized by**
- a respective embossed closed contour (16) around each through-hole in the stopper layer (6) and the spacer layer (4), wherein the contour (16) forms a fixing aid;
wherein
- the embossed contour (16) is a form-fitting common contour in the spacer layer (4) and the stopper layer (6); and
- the embossed contour (16) points in the direction of the functional layer (2).

2. Metallic flat gasket, in particular cylinder head gasket, having at least one through-hole, comprising
- a functional layer (2);
- a spacer layer (4); and
- a stopper layer (6) arranged between the functional layer (2) and the spacer layer (4);
- a respective closed sealing bead (12) in the functional layer (2) around each through-hole, wherein the sealing bead (12) points in the direction of the stopper layer (6);
**characterized by**
- a respective embossed closed contour (16) around each through-hole in the stopper layer (6) and the functional layer (2), wherein the contour (16) forms a fixing aid; and
wherein
- the functional layer (2) and the stopper layer (6) rest against each other;
- the embossed contour (16) is a form-fitting common contour in the functional layer (2) and the stopper layer (6); and
- the embossed contour (16) points in the direction of the spacer layer (4).

3. Metallic flat gasket according to one of claims 1 or 2, wherein the embossed contour (16), in the radial direction from a respective through-hole, is arranged before and/or behind the respective sealing bead (12).

4. Metallic flat gasket according to one of claims 1 to 3, further comprising
- a second functional layer (8) on the side of the spacer layer (4) that is facing away from the stopper layer (6); and
- a respective closed sealing bead (18) in the second functional layer (8) around each through-hole, wherein the sealing bead (18) points in the direction of the spacer layer (4).

5. Metallic flat gasket according to one of claims 1 to 4, wherein
- the sealing bead(s) (12, 18) in the functional layer (2) and/or the second functional layer (8) overlap(s) with the stopper layer (6).

6. Method for producing a metallic flat gasket, in particular cylinder head gasket, having at least one through-hole, comprising
- providing a functional layer (2);
- providing a spacer layer (4); and
- providing a stopper layer (6) arranged between the functional layer (2) and the spacer layer (4);
- providing a respective closed sealing bead (12) in the functional layer (2) around each through-hole, wherein the sealing bead (12) points in the direction of the stopper layer (6); and
further comprising
- connecting the spacer layer (4) and the stopper layer (6) so that the spacer layer (4) and the stopper layer (6) rest against each other;
**characterized by**
- embossing a closed contour (16) in the stopper layer (6) and the spacer layer (4) around each through-hole, wherein the contour (16) forms a fixing aid;
wherein the contour (16) is form-fittingly and commonly embossed in the spacer layer (2) and the stopper layer (6), wherein the embossed contour (16) points in the direction of the functional layer (2).

7. Method for producing a metallic flat gasket, in particular cylinder head gasket, having at least one through-hole, comprising
- providing a functional layer (2);
- providing a spacer layer (4); and
- providing a stopper layer (6) arranged between the functional layer (2) and the spacer layer (4);
- providing a respective closed sealing bead (12) in the functional layer (2) around each through-hole, wherein the sealing bead (12) points in the direction of the stopper layer (6);
**characterized by**
- embossing a closed contour (16) in the stopper layer (6) and the functional layer (2) around each through-hole, wherein the contour (16) forms a fixing aid;
further comprising
- connecting the functional layer (2) and the stopper layer (6) so that the functional layer (2) and the stopper layer (6) rest against each other;
wherein the contour (16) is form-fittingly and commonly embossed in the functional layer (2) and the stopper layer (6), wherein the embossed contour (16) points in the direction of the spacer layer (4).

8. Method according to claim 7, wherein the functional layer (2) and the stopper layer (6) are formed together so as to form the sealing bead (12).

9. Method according to one of claims 6 to 8, wherein the contour (16), in the radial direction from a respective through-hole, is arranged before and/or behind the respective sealing bead (12).

10. Method according to one of claims 6 to 9, further comprising
- providing a second functional layer (8) on the side of the spacer layer (4) that is facing away from the stopper layer (6); and
- providing a respective closed sealing bead (18) in the second functional layer (8) around each through-hole, wherein the sealing bead (18) points in the direction of the spacer layer (4).

11. Method according to one of claims 6 to 10, wherein
- the sealing bead(s) (12, 18) in the functional layer (2) and/or the second functional layer (8) overlap(s) with the stopper layer (6).

## Revendications

1. Joint d'étanchéité plat métallique, en particulier joint de culasse avec au moins une ouverture de passage, comprenant :
- une couche fonctionnelle (2),
- une couche de séparation (4) et
- une couche d'arrêt (6) disposée entre la couche fonctionnelle (2) et la couche de séparation (4),
- à chaque fois une nervure d'étanchéité (12) fermée dans la couche fonctionnelle (2) autour de chaque ouverture de passage, la nervure d'étanchéité (12) étant orientée en direction de la couche d'arrêt (6) et la couche de séparation (4) et la couche d'arrêt (6) étant placées l'une à côté de l'autre **caractérisé par**
- à chaque fois un contour (16) fermé en creux dans la couche d'arrêt (6) et dans la couche de séparation (4) autour de chaque ouverture de passage, le contour (16) assurant un maintien en place,
- le contour (16) en creux étant un contour commun en complémentarité de forme dans la couche de séparation (4) et la couche d'arrêt (6) et
- le contour (16) en creux étant orienté en direction de la couche fonctionnelle (2).

2. Joint d'étanchéité plat métallique, en particulier joint de culasse, avec au moins une ouverture de passage, comprenant :
- une couche fonctionnelle (2),
- une couche de séparation (4) et
- une couche d'arrêt (6) disposée entre une couche fonctionnelle (2) et une couche de séparation (4),
- à chaque fois une nervure d'étanchéité (12) fermée dans la couche fonctionnelle (2) autour de chaque ouverture de passage, la nervure d'étanchéité (12) étant orientée en direction de la couche d'arrêt (6) **caractérisé par**
- à chaque fois un contour (16) fermé en creux dans la couche d'arrêt (6) et dans la couche fonctionnelle (2) autour de chaque ouverture de passage, le contour (16) assurant un maintien en place et pour lequel
- la couche fonctionnelle (2) et la couche d'arrêt (6) sont placées l'une à côté de l'autre,
- le contour (16) en creux est un contour commun en complémentarité de forme dans la couche fonctionnelle (2) et la couche d'arrêt (6) et
- le contour (16) en creux est orienté en direction de la couche de séparation (4).

3. Joint d'étanchéité plat métallique selon une quelconque des revendications 1 à 2 pour lequel le contour (16) en creux est disposé dans le sens radial d'une ouverture de passage respective avant et/ou après la nervure d'étanchéification (12) correspondante.

4. Joint d'étanchéité plat métallique selon une quelconque des revendications 1 à 3 comprenant en plus
- une deuxième couche fonctionnelle (8) sur le côté de la couche de séparation (4) opposé à la couche d'arrêt (6) et
- à chaque fois une nervure d'étanchéité (18) fermée dans la deuxième couche fonctionnelle (8) autour de chaque ouverture de passage, la nervure d'étanchéité (18) étant orientée en direction de la couche d'écartement.

5. Joint d'étanchéité plat métallique selon une quelconque des revendications 1 à 4 pour lequel
- la/les nervure(s) d'étanchéité (12, 18) dans la couche fonctionnelle (2) et/ou la deuxième couche fonctionnelle (8) et la couche d'arrêt se superposent.

6. Procédé destiné à la fabrication d'un joint d'étanchéité plat métallique, en particulier joint de culasse, avec au moins une ouverture de passage, comprenant
- la préparation d'une couche fonctionnelle (2),
- la préparation d'une couche de séparation (4) et
- la préparation d'une couche d'arrêt (6) disposée entre la couche fonctionnelle (2) et la couche de séparation (4)
- la préparation à chaque fois d'une nervure d'étanchéification (12) fermée dans la couche fonctionnelle (2) autour de chaque ouverture de passage, la nervure d'étanchéification (12) étant orientée en direction de la couche d'arrêt (6) et comprenant en plus
- le raccordement de la couche de séparation (4) et de la couche d'arrêt (6)
de sorte que la couche de séparation (4) et la couche d'arrêt sont placées l'une à côté de l'autre **caractérisé par**
- la formation en creux d'un contour fermé (16) dans la couche d'arrêt (6) et la couche de séparation (4) autour de chaque ouverture de passage, le contour (16) assurant un maintien en place,
- le contour (16) étant formé en creux conjointement par complémentarité de forme dans la couche de séparation (2) et la couche d'arrêt (6), le contour (16) en creux étant orienté en direction de la couche fonctionnelle (2).

7. Procédé destiné à la fabrication d'un joint d'étanchéité plat métallique, en particulier joint de culasse, avec au moins une ouverture de passage, comprenant
- la préparation d'une couche fonctionnelle (2),
- la préparation d'une couche de séparation (4) et
- la préparation d'une couche d'arrêt (6) disposée entre la couche fonctionnelle (2) et la couche de séparation (4)
- la préparation à chaque fois d'une nervure d'étanchéification (12) fermée dans la couche fonctionnelle (2) autour de chaque ouverture de passage, la nervure d'étanchéification (12) étant orientée en direction de la couche d'arrêt (6) **caractérisé par**
- la formation en creux d'un contour fermé (16) dans la couche d'arrêt (6) et la couche fonctionnelle (2) autour de chaque ouverture de passage, le contour (16) assurant un maintien en place,
comprenant en plus
- le raccordement de la couche fonctionnelle (2) et de la couche d'arrêt (6)
de sorte que la couche fonctionnelle (2) et la couche d'arrêt sont placées l'une à côté de l'autre,
le contour (16) étant formé en creux conjointement par complémentarité de forme dans la couche fonctionnelle (2) et la couche d'arrêt (6), le contour (16) en creux étant orienté en direction de la couche de séparation(4).

8. Procédé selon la revendication 7 pour lequel la couche fonctionnelle (2) et la couche d'arrêt (6) sont conjointement transformées pour former la nervure d'étanchéité (12).

9. Procédé selon une quelconque des revendications 6 à 8 pour lequel le contour (16) est formé en creux dans le sens radial depuis l'ouverture de passage respective avant et/ou derrière la nervure d'étanchéité (12) correspondante.

10. Procédé selon une quelconque des revendications 6 à 9, comprenant en plus
- la préparation d'une deuxième couche fonctionnelle (8) sur le côté opposé à la couche d'arrêt (6) de la couche de séparation (4) et
- la préparation à chaque fois d'une nervure d'étanchéité (18) fermée dans la deuxième couche fonctionnelle (8) autour de chaque ouverture de passage, la nervure d'étanchéité (18) étant orientée en direction de la couche de séparation (4).

11. Procédé selon une quelconque des revendications 6 à 10 pour lequel
- la/les nervure(s) d'étanchéité (12, 18) dans la couche fonctionnelle (2) et/ou la deuxième couche fonctionnelle (8) et la couche d'arrêt (6) se superposent.
